# EUROPEAN PATENT SPECIFICATION

(11) **EP 1 525 805 B1**
(45) Date of publication and mention of the grant of the patent: **13.06.2007**
(21) Application number: 04256138.1
(22) Date of filing: 04.10.2004
(51) Int. Cl.: A23L 1/10, A23L 3/04, B65B 55/02, A23L 3/015

(54) **Process of producing sterilised cooked rice packaged in containers**
Herstellungsverfahren von sterilisiertem gekochten Reis verpackt in Behälter
Procédé de préparation de riz cuit sterilisé emballé dans des conteneurs

(30) Priority: 23.10.2003 JP 2003362941
(43) Date of publication of application: 27.04.2005
(73) Proprietor: KAGOME KABUSHIKI KAISHA, Nagoya-shi Aichi-ken (JP)
(72) Inventor: Fukaya, Tetsuya, c/o Kagome K.K. Sogokenkyusho, Nasu-gun Tochigi-ken (JP); Yoshihara, Kendou, Shibata-shi Niigata-ken (JP); Sakuma, Kinya, Shibata-shi Niigata-ken (JP)
(74) Representative: Smyth, Gyles Darren

(56) References cited:
- US-A- 5 860 356
- PATENT ABSTRACTS OF JAPAN vol. 1997, no. 10, 31 October 1997 (1997-10-31) -& JP 09 149766 A (NICHIREI CORP), 10 June 1997 (1997-06-10)
- PATENT ABSTRACTS OF JAPAN vol. 2000, no. 25, 12 April 2001 (2001-04-12) -& JP 2001 224321 A (KAGOME CO LTD; NITTO ARIMAN KK), 21 August 2001 (2001-08-21)
- DATABASE WPI Section Ch, Week 197747 Derwent Publications Ltd., London, GB; Class D13, AN 1977-83939Y XP002317467 -& JP 52 122645 A (DAINIPPON PRINTING CO LTD) 15 October 1977 (1977-10-15)
- PATENT ABSTRACTS OF JAPAN vol. 2000, no. 06, 22 September 2000 (2000-09-22) -& JP 2000 078950 A (KNORR FOODS CO LTD; AJINOMOTO CO INC), 21 March 2000 (2000-03-21)

## Description

### Background of the Invention

This invention relates to a method of producing sterilized cooked rice packaged in containers. It has been known to produce sterilized cooked rice packaged in containers by using an apparatus comprised of a retort and a clean room connected thereto, arranging many containers on each of a plurality of shelves, each containing a specified amount of rice, which has been immersed in water, and from which the water has been drained, as well as a specified amount of cooking water, placing them inside the retort, cooking the rice in each container inside the retort, taking the containers out into the clean room and sealing the containers inside the clean room. This invention relates to an improvement on such a method of producing sterilized cooked rice packaged in containers.

Japanese Patent Publications Tokkai 6-46770 and 2001-224321, for example, disclose such methods of producing sterilized cooked rice packaged in containers by using many mobile shelves, arranging on these shelves many containers each containing a specified amount of rice, which has been immersed in water; and from which the water has been drained, as well as a specified amount of cooking water, inserting them inside a retort, and cooking the rice in each of the containers inside the retort under specified pressure and heating conditions.

Conventional methods, as described above, have the problem of large specks or spots that appear when the large number of containers are observed as a whole, depending on their positions on many stages of shelves. This may be because the stirring of rice inside individual containers and heat transmission vary, depending upon the positions of the many containers arranged on many shelves.

Other methods of cooking rice are described in US 5,860,356, JP 09-149766A, JP 52-122645A and JP2000-078950A

### Summary of the Invention

It is, therefore, an object of this invention to provide a method of producing sterilized cooked rice packaged in containers by using an apparatus having a retort and a clean room connected thereto, arranging a plurality of containers on each of a plurality of shelves, each of these containers containing specified amounts of cooking water, and rice, which has been soaked in water, and from which water has been drained, placing the shelves inside the retort, cooking the rice in each of the containers inside the retort, and thereafter sealing each of the containers inside the clean room such that specks and spots appearing on the rice will be reduced.

A method embodying this invention of producing sterilized cooked rice packaged in containers is similar to the conventional method, in that it also comprises the steps of providing an apparatus with a retort and a clean room connected to the retort, arranging a plurality of containers on each of a plurality of shelves, each of the containers containing specified amounts of cooking water and rice, which has been soaked in water, and from which water ahs been drained, placing the shelves inside the retort, cooking the rice in each of the containers inside the retort, and thereafter sealing each of the containers inside the clean room, but it is characterized in that the cooking of the rice inside the retort is carried out at Fo value 0.1-1.5 by repeating a pressure increase inside the retort and a pressure reduction so as to boil the cooking water once or more per minute. The retort to be used according to the this invention may be either of the so-called batch type or the continuous type. The rice to be used may be preliminarily washed with water. Individualized trays of a heat-resistant plastic material may be used as the containers. Sealing of these containers may be effected by a heat sealing method by covering the container with a film and subjecting the film to a heat-sealing process.

When the rice in containers is cooked inside the retort according to this invention, the pressure inside the retort is increased and then allowed to drop under the condition that the cooking water boils in each of the containers and this is repeated at least once per minute while the cooking is carried out at Fo value 0.1-1.5. Heated, high-pressure steam is usually used for the cooking. Such heated high-pressure steam is introduced into the retort so as to create an atmosphere of heated high-pressure steam inside the retort but, if rice is cooked merely inside such an atmosphere, large spots are formed, as explained above, when the many containers are observed as a whole, probably because the stirring of rice and heat transfer are influenced by, and vary depending upon, the position of the individual containers arranged on many shelves. In order to prevent the generation of such spots, not only is heated high-pressure steam introduced into the retort to form an atmosphere of heated high-pressure steam, but the heated high-pressure steam is allowed to escape out of the retort so as to reduce the pressure inside, and to thereby cause the cooking water in each container to boil, and to accelerate the stirring of the rice and the transfer of heat. If such operations, involving supplying heated high-pressure steam to create an atmosphere of heated high-pressure steam, and increasing the pressure inside the retort and releasing it out of the retort to reduce its pressure to boil the cooking water, are repeated at the rate of once or more per minute, it is possible to uniformly cook rice in many containers arranged on many shelves.

The aforementioned condition on the Fo value at the time of cooking rice is basically the condition for obtaining sterilized cooked rice, and also represents the condition for preventing putrefaction of rice prepared under ordinary conditions. It is preferred to keep the Fo value at 0.3-0.9, in the case of cooking rice in individual containers.

It is preferable to preliminarily sterilize the surface of rice by means of steam or a heater. The surface of rice may be preliminary sterilized, and the rice thus preliminarily sterilized may be placed inside individual containers, together with cooking water, but it is preferable to place the rice in the containers first, to preliminarily sterilize the surface of the rice, and to thereafter add cooking water into the individual containers. Ordinary water may be used as the cooking water, but cooking water having its pH value adjusted to 2.5-4.2 by using an organic acid, such as citric acid and gluconic acid, is preferred. If simple water is used for the cooking water, it is preferable to carry out the aforementioned preliminary sterilization process at Fo value of 6.0-1.5. If cooking water is adjusted to pH value of 2.5-4.2, it is preferable to carry out the preliminary sterilization process at Fo value of 0.1-4.0. The weight ratio between the rice and the cooking water to be placed in each container is preferably 1/0.64 - 1/1.20. All these conditions are such that cooked rice with original flavor can be obtained and putrefaction can be prevented.

According to the method of this invention, a pressure increase inside the retort and a pressure reduction so as to boil the cooking water are repeated once or more per minute, and preferably 2 - 4 times per minute. It is more preferable to repeat this pressure increase and pressure reduction such that the atmospheric temperature inside the retort is 105±3°C and 102±2°C respectively at the pressure increase and the pressure reduction and that the temperature difference between times of the pressure increase and the pressure reduction be 2-8°C, and it is further preferable to repeat the pressure increase and pressure reduction such that the pressure inside the retort is 0.13±0.02MPa and 0.11±0.02MPa respectively at the pressure increase and at the pressure reduction and that the pressure difference between times of the pressure increase and the pressure reduction by 0.01-0.05MPa.

According to the method of this invention, after rice is thus cooked in each of the containers, the containers are each sealed inside the clean room. After the containers are thus sealed, it is preferable to rotate or turn upside-down each of the containers, and to steam the cooked rice, and it is further preferable to steam the rice at 65-100°C for 5-25 minutes, because sterilized cooked rice, with its original desirable flavour, and with desired resistance against putrefaction over time, can be produced without generating spots due to water content, dependent upon their positions on the many shelves on which they are placed.

### Description of Preferred Embidiments of the Invention

The invention is described next by way of the following two preferred embodiments:

### (1) First embodiment of the invention:

After commercially available rice is further pounded and soaked in water for 30 minutes, the water is drained. A specified amount of the rice, from which water has been drained, is placed inside an individual meal tray of a plastic material with heat resistance, and its surface is preliminarily sterilized with heated steam at Fo value of 10. Cooking water, of which the pH value is not adjusted, is added into this tray such that the weight ratio between the water-drained rice and cooking water becomes 1/1. Altogether, 144 of such trays are prepared and placed on six shelves such that 24 (=6x4) trays are on each of the six shelves. The shelves are then placed in a retort, and a cycle of operations, including a pressure increase process for supplying heated high-pressure steam into the retort, and a pressure reduction process for causing the heated high-pressure steam inside the retort to escape, such that the cooking water in each container boils, is repeated three times per minute for a period of 15 minutes at Fo value of 0.5 to cook the rice. In this process, the atmospheric temperature inside the retort is 105°C and 102°C respectively at the pressure increase process and at the pressure reduction process, their difference being 3°C. The pressure inside the retort was 0.13MPa and 0.11MPa respectively at the pressure increase process and at the pressure reduction process, their difference being 0.02MPa. After rice is thus cooked in each of the 144 trays, they are transported out from the retort into a clean room connected thereto. After the cooked rice in each tray is cooled to 80-90°C inside the clean room, a plastic cover is placed on each tray and sealed with heat.

### (2) Second embodiment of the invention

After commercially available rice is washed with water, it is soaked in water for 30 minutes, and the water is drained. A specified amount of the rice, from which water has been drained, is placed inside an individual meal tray of a plastic material with heat resistance, and its surface is preliminarily sterilized with heated steam at Fo value of 2.5. Cooking water, of which the pH value is adjusted to 4.0 with gluconic acid, is added into this tray, such that the weight ratio between the water-drained rice and cooking water becomes 1/1. Altogether, 144 of such trays are prepared and placed on six shelves such that 24 (=6x4) trays are on each of the six shelves. The shelves are then placed in a retort, and a pressure increase process for supplying heated high-pressure steam into the retort, and a pressure reduction process for causing the heated high-pressure steam inside the retort to escape, such that the cooking water in each container boils, are repeated three times per minute for a period of 15 minutes at Fo value of 0.5 to cook the rice. In this process, the atmospheric temperature inside the retort is 105°C and 102°C respectively at the pressure increase process and at the pressure reduction process, their difference being 3°C. The pressure inside the retort was 0.13MPa and 0.11MPa respectively at the pressure increase process and at the pressure reduction process, their difference being 0.02MPa. After rice is thus cooked in each of the 144 trays, they are transported out from the retort into a clean room connected thereto. After the cooked rice in each tray is cooled to 80-90°C inside the clean room, a plastic cover is placed on each tray and sealed with heat. Each tray is turned upside-down and steamed for 10 minutes.

### Examples

The invention is described next by way of examples:

### Test Example 1

After commercially available rice was further pounded and soaked in water for 30 minutes, the water was drained. A specified amount of the rice, from which water had been drained, was placed inside an individual meal tray of a plastic material with heat resistance, and its surface was preliminarily sterilized with heated steam at Fo value of 10. Cooking water, of which the pH value had not been adjusted, was added into this tray such that the weight ratio between the water-drained rice and cooking water became 1/1. Altogether, 144 of such trays were prepared and placed on six shelves such that 24 (=6x4) trays were on each of the six shelves. The shelves were then placed in a retort, and a cycle of operations, including a pressure increase process for supplying heated high-pressure steam into the retort, and a pressure reduction process for causing the heated high-pressure steam inside the retort to escape, such that the cooking water in each container boiled, was repeated once per minute for a period of 15 minutes at Fo value of 0.5 to cook the rice. In this process, the atmospheric temperature inside the retort was 105°C and 102°C respectively at the pressure increase process and at the pressure reduction process, their difference being 3°C. The pressure inside the retort was 0.13MPa and 0.11 MPa respectively at the pressure increase process and at the pressure reduction process, their difference being 0.02MPa. After rice was thus cooked in each of the 144 trays, they were transported out from the retort into a clean room connected thereto. After the cooked rice in each tray was cooled to 80-90°C inside the clean room, a plastic cover was placed on each tray and sealed with heat.

### Test Example 2

The same as Text Example 1, except that the cycle of operations, including a pressure increase process for supplying heated high-pressure steam into the retort, and a pressure reduction process for causing the heated high-pressure steam inside the retort to escape, such that the cooking water in each container boiled, was repeated three times per minute for a period of 15 minutes to cook the rice.

### Test Example 3

After commercially available rice was washed with water, it was soaked in water for 30 minutes, and the water was drained. A specified amount of the rice, from which water had been drained, was placed inside an individual meal tray of a plastic material with heat resistance, and its surface was preliminary sterilized with heated steam at Fo value of 2.5. Cooking water, of which the pH value was adjusted to 4.0 with gluconic acid, was added into this tray such that the weight ratio between the water-drained rice and cooking water became 1/1. Altogether, 144 of such trays were prepared and placed on six shelves such that 24 (=6x4) trays were on each of the six shelves. The shelves were then placed in a retort and a cycle of operations, including a pressure increase process for supplying heated high-pressure steam into the retort, and a pressure reduction process for causing the heated high-pressure steam inside the retort to escape, such that the cooking water in each container boiled, was repeated three times per minute for a period of 15 minutes at Fo value of 0.5 to cook the rice. In this process, the atmospheric temperature inside the retort was 105°C and 102°C respectively at the pressure increase process and at the pressure reduction process, their difference being 3°C. The pressure inside the retort was 0.13MPa and 0.11MPa respectively at the pressure increase process and at the pressure reduction process, their difference being 0.02MPa. After rice was thus cooked in each of the 144 trays, they were transported out from the retort into a clean room connected thereto. After the cooked rice in each tray was cooled to 80-90°C inside the clean room, a plastic cover was placed on each tray and sealed with heat. Each tray was turned upside down and steamed for 10 minutes.

### Comparison Example 1.

The same as Test Example 1, except that the pressure increase and reduction processes were not repeated, and heated high-pressure steam was merely supplied into the retort to cook the rice at Fo value of 0.5 by maintaining the atmospheric temperature and pressure inside the retort at 105°C and 0.13MPa, respectively.

### Comparison Example 2

The same as Test Example 1, except that the cycle of operations, including a pressure increase process for supplying heated high-pressure steam into the retort, and a pressure reduction process for causing the heated high-pressure steam inside the retort to escape, such that the cooking water in each container boiled, was repeated at the rate of once every three minutes.

### Comparison Example 3

The same as Test Example 1, except that the cycle of operations, including a pressure increase process for supplying heated high-pressure steam into the retort, and a pressure reduction process for causing the heated high-pressure steam inside the retort to escape, such that the cooking water in each container boiled, was repeated at the rate of once every five minutes.

### Evaluation 1

In each of the Examples described above, four trays at the corners, and four trays arranged at the centre on each of the 6 shelves were extracted. For each shelf, 3g of cooked rice at an upper portion on one side surface, and 3g of cooked rice at a lower central portion from each of the four trays at the corners were sampled, the difference between their water contents was measured, and their average values were calculated. For each shelf, the average water content values were calculated for the four trays at the centre. The samples were evaluated as follows, according to these average values, and the results are shown in Table 1.

**Table 1**

| | | Test Example | | | Comparison Examples | | |
|---|---|---|---|---|---|---|---|
| | | 1 | 2 | 3 | 1 | 2 | 3 |
| First Shelf | 4 corners | B | B | A | C | C | C |
| | Center | B | A | A | C | B | B |
| Second Shelf | 4 corners | A | A | A | C | B | C |
| | Center | A | A | A | B | B | B |
| Third Shelf | 4 corners | A | A | A | B | B | B |
| | Center | B | A | A | C | C | C |
| Fourth Shelf | 4 corners | A | A | A | B | B | B |
| | Center | B | A | A | C | C | C |
| Fifth Shelf | 4 corners | A | A | A | C | B | C |
| | Center | A | A | A | C | B | B |
| Sixth Shelf | 4 corners | B | B | A | C | C | C |
| | Center | B | A | A | C | B | C |

In Table 1:
A: Excellent because the average of difference in water content is less than 2% and there are hardly any spots;
B: Good because the average of difference in water content is 2% or greater and less than 4% although there are a few spots;
C: Poor because the average of difference in water content is 4% or greater and spots are large.

### Evaluation 2

In each of the Examples described above, 3g of cooked rice was sampled from the centre portion of each of the 144 trays arranged on the six shelves. The water content of each sample was measured, and their average, maximum, minimum, fluctuation width R, and standard deviation were calculated. The results are shown in Table 2.

**Table 2**

| | Test Examples | | | Comparison Examples | | |
|---|---|---|---|---|---|---|
| | 1 | 2 | 3 | 1 | 2 | 3 |
| Average | 59.5 | 60.0 | 60.0 | 57.9 | 58. 1 | 58.0 |
| Maximum | 61.5 | 61.8 | 61.1 | 60.9 | 60.5 | 60.7 |
| Minimum | 57.0 | 58.2 | 58.7 | 53.9 | 54.9 | 54.5 |
| Fluctuation R | 4.5 | 3.6 | 2.4 | 7.0 | 5.6 | 6.2 |
| Standard Deviation | 0.969 | 0.946 | 0.621 | 1.836 | 1.498 | 1.650 |

Both Tables 1 and 2 show that rice can be cooked nearly uniformly according to this invention, independently of the positions of the trays placed on the shelves, and hence that sterilized cooked rice packaged in containers with hardly any spots can be obtained.

## Claims

1. A method of producing sterilized cooked rice packaged in containers, said method comprising the steps of:
providing an apparatus with a retort and a clean room connected to said retort;
arranging a plurality of containers on each of a plurality of shelves, each of said containers containing specified amounts of cooking water and rice which has been soaked in water and from which water has been drained;
placing said shelves inside said retort;
cooking said rice in each of said containers inside said retort at Fo value 0.1-1.5 by repeating a pressure increase inside said retort and a pressure reduction to cause boiling of said cooking water at least once per minute; and
thereafter sealing each of said containers inside said clean room.

2. The method of claim 1, wherein said pressure increase and said pressure reduction are repeated 2-4 times per minute.

3. A method according to any preceding claim, wherein said pressure increase and said pressure reduction are repeated such that the environmental temperature inside said retort is 105±3°C and 102±2°C respectively at said pressure increase and at said pressure reduction and that the temperature difference between times of said pressure increase and said pressure reduction is 2-8°C.

4. A method according to any preceding claim, wherein said pressure increase and said pressure reduction are repeated such that the pressure inside said retort is 0.13±0.02MPa and 0.11±0.02MPa respectively at said pressure increase and at said pressure reduction and that the pressure difference between times of said pressure increase and said pressure reduction is 0.01-0.05MPa.

5. A method according to any preceding claim, further comprising the step of preliminarily sterilizing said rice at Fo value of 6.0-15 either before or after said rice is placed in said containers.

6. A method according to any preceding claim, wherein the pH of said cooking water is adjusted to pH 2.5-4.2.

7. A method according to Claim 6, further comprising the step of preliminarily sterilizing said rice at Fo value of 0.1-4.0 either before or after said rice is placed in said containers.

8. A method according to any preceding claim, wherein said rice and said cooking water are placed in each of said containers at weight ratio of 1/0.64-1/1.20.

9. A method according to any preceding claim, further comprising the step of steaming said cooked rice inside each of said containers by either rotating or turning upside-down each of said containers after said containers are sealed inside said clean room.

## Patentansprüche

1. Herstellungsverfahren von sterilisiertem, gekochtem Reis, verpackt in Behältern, wobei das Verfahren die folgenden Schritte aufweist:
Bereitstellen einer Vorrichtung mit einer Retorte und einem Reinraum, der mit der Retorte verbunden ist;
Anordnen einer Vielzahl von Behältern auf jedem einer Vielzahl von Regalen, wobei jeder der Behälter vorgeschriebene Mengen an Kochwasser und Reis enthält, der im Wasser eingeweicht wurde, und aus dem man Wasser abtropfen ließ;
Anordnen der Regale innerhalb der Retorte;
Kochen des Reises in jedem der Behälter innerhalb der Retorte bei einem Fo-Wert von 0,1 bis 1,5 durch Wiederholen eines Druckanstieges innerhalb der Retorte und einer Druckverminderung, um das Sieden des Kochwassers mindestens einmal pro Minute zu veranlassen; und
danach Verschließen eines jeden der Behälter innerhalb des Reinraumes.

2. Verfahren nach Anspruch 1, bei dem der Druckanstieg und die Druckverminderung 2- bis 4-mal pro Minute wiederholt werden.

3. Verfahren nach einem der vorhergehenden Ansprüche, bei dem der Druckanstieg und die Druckverminderung so wiederholt werden, dass die Umgebungstemperatur innerhalb der Retorte 105 ± 3 °C und 102 ± 2 °C jeweils beim Druckanstieg und bei der Druckverminderung beträgt, und dass die Temperaturdifferenz zwischen den Zeitpunkten des Druckanstieges und der Druckverminderung 2 bis 8 °C beträgt.

4. Verfahren nach einem der vorhergehenden Ansprüche, bei dem der Druckanstieg und die Druckverminderung so wiederholt werden, dass der Druck innerhalb der Retorte 0,13 ± 0,02 MPa und 0,11 ± 0,02 MPa jeweils beim Druckanstieg und bei der Druckverminderung beträgt, und dass die Druckdifferenz zwischen den Zeitpunkten des Druckanstieges und der Druckverminderung 0,01 bis 0,05 MPa beträgt.

5. Verfahren nach einem der vorhergehenden Ansprüche, das außerdem den Schritt des Vorsterilisierens des Reises beim Fo-Wert von 6,0 bis 15 entweder vor oder nach dem Anordnen des Reises in den Behältern aufweist.

6. Verfahren nach einem der vorhergehenden Ansprüche, bei dem der pH-Wert des Kochwassers auf einen pH-Wert von 2,5 bis 4,2 reguliert wird.

7. Verfahren nach Anspruch 6, das außerdem den Schritt des Vorsterilisierens des Reises beim Fo-Wert von 0,1 bis 4,0 entweder vor oder nach dem Anordnen des Reises in den Behältern aufweist.

8. Verfahren nach einem der vorhergehenden Ansprüche, bei dem der Reis und das Kochwasser in jedem der Behälter mit einem Gewichtsverhältnis von 1/0,64 bis 1/1,20 angeordnet werden.

9. Verfahren nach einem der vorhergehenden Ansprüche, das außerdem den Schritt des Dämpfens des gekochten Reises innerhalb eines jeden der Behälter durch entweder Drehen oder Wenden eines jeden der Behälter mit dem Kopf nach unten aufweist, nachdem die Behälter innerhalb des Reinraumes verschlossen werden.

## Revendications

1. Procédé de production de riz cuit stérilisé emballé dans des récipients, ledit procédé comprenant les étapes ci-dessous:
fourniture d'un appareil comportant un autoclave et une salle blanche connectée audit autoclave;
agencement de plusieurs récipients sur chacune de plusieurs plaques, chacun desdits récipients contenant des quantités spécifiées d'eau de cuisson et de riz ayant été trempé dans l'eau et dont l'eau a été évacuée;
positionnement desdites plaques dans ledit autoclave;
cuisson dudit riz dans chacun desdits récipients à l'intérieur dudit autoclave à une valeur Fo comprise entre 0,1 et 1,5 en répétant un accroissement de la pression dans ledit autoclave et une réduction de la pression pour entraîner l'ébullition de ladite eau de cuisson au moins une fois par minute; et
fermeture étanche de chacun desdits récipients à l'intérieur de ladite salle blanche.

2. Procédé selon la revendication 1, dans lequel ledit accroissement de la pression et ladite réduction de la pression sont répétés 2 à 4 fois par minute.

3. Procédé selon l'une quelconque des revendications précédentes, dans lequel ledit accroissement de la pression et ladite réduction de la pression sont répétés de sorte que la température ambiante dans ledit autoclave correspond respectivement à 105 ±3°C et à 102±2°C lors dudit accroissement de la pression et de ladite réduction de la pression, la différence de la température entre les répétitions dudit accroissement de la pression et ladite réduction de la pression étant comprise entre 2 et 8°.

4. Procédé selon l'une quelconque des revendications précédentes, dans lequel ledit accroissement de la pression et ladite réduction de la pression sont répétés de sorte que la pression à l'intérieur dudit autoclave correspond respectivement à 0,13±0,02 MPa et à 0,11±0,02 MPa lors dudit accroissement de la pression et de ladite réduction de la pression, la différence de pression entre les répétitions dudit accroissement de la pression et de ladite réduction de la pression étant comprise entre 0,01 et 0,05 MPa.

5. Procédé selon l'une quelconque des revendications précédentes, comprenant en outre l'étape de stérilisation préalable dudit riz à une valeur Fo comprise entre 6,0 et 15 avant ou après la mise en place dudit riz dans lesdits récipients.

6. Procédé selon l'une quelconque des revendications précédentes, dans lequel le pH de ladite eau de cuisson est ajusté à un pH compris entre 2,5 et 4,2.

7. Procédé selon la revendication 6, comprenant en outre l'étape de stérilisation préalable dudit riz à une valeur Fo comprise entre 0,1 et 4,0 avant ou après la mise en place dudit riz dans lesdits récipients.

8. Procédé selon l'une quelconque des revendications précédentes, dans lequel ledit riz et ladite eau de cuisson sont placés dans chacun desdits récipients avec un rapport de poids compris entre 1/0,64 et 1/1,20.

9. Procédé selon l'une quelconque des revendications précédentes, comprenant en outre l'étape de cuisson à la vapeur dudit riz cuit à l'intérieur de chacun desdits récipients, en faisant tourner ou en plaçant à l'envers chacun desdits récipients après la fermeture étanche desdits récipients dans ladite salle blanche.
